# EUROPÄISCHE PATENTSCHRIFT

(11) **EP 2 539 866 B1**
(45) Veröffentlichungstag und Bekanntmachung des Hinweises auf die Patenterteilung: **19.04.2017**
(21) Anmeldenummer: 11705185.4
(22) Anmeldetag: 10.02.2011
(51) Int. Cl.: G06K 9/60, G06T 7/00, G06K 9/00

(54) **VERFAHREN UND VORRICHTUNG ZUR FREISICHTPRÜFUNG EINER KAMERA FÜR EIN AUTOMOBILES UMFELD**
METHOD AND APPARATUS FOR CHECKING THE CLEAR VISIBILITY OF A CAMERA FOR AN AUTOMOTIVE ENVIRONMENT
PROCÉDÉ ET DISPOSITIF POUR VÉRIFIER LA NON OCCULTATION VISUELLE D'UNE CAMÉRA DESTINÉE AU CHAMP PÉRIPHÉRIQUE D'UNE AUTOMOBILE

(30) Priorität: 24.02.2010 DE 102010002310
(43) Veröffentlichungstag der Anmeldung: 02.01.2013
(73) Patentinhaber: Robert Bosch GmbH, 70442 Stuttgart (DE); Audi AG, 85045 Ingolstadt (DE)
(72) Erfinder: EHLGEN, Tobias, 72076 Tuebingen (DE); LIPINSKI, Daniel, 81929 München (DE)
(86) Internationale Anmeldenummer: PCT/EP2011/051927
(87) Internationale Veröffentlichungsnummer: WO 2011/104123

(56) Entgegenhaltungen:
- EP-A2- 1 411 469
- EP-A2- 1 548 685
- US-A1- 2006 115 121
- US-A1- 2007 194 208
- US-A1- 2009 136 125
- LELEVE J ET AL: "FOG LAMP AUTOMATION WITH VISIBILITY SENSOR THE NEXT STEP OF LIGHTING AUTOMATION", VDI BERICHTE, DUESSELDORF, DE, Nr. 1907, 1. Januar 2005 (2005-01-01), Seiten 151-160, XP008061020, ISSN: 0083-5560
- BUSCH C ET AL: "Wavelet transform for analyzing fog visibility", IEEE INTELLIGENT SYSTEMS, IEEE SERVICE CENTER, NEW YORK, NY, US, Bd. 13, Nr. 6, 1. November 1998 (1998-11-01), Seiten 66-71, XP002247567, ISSN: 1094-7167, DOI: DOI:10.1109/5254.736004

## Beschreibung

### Stand der Technik

Die vorliegende Erfindung bezieht sich auf ein Verfahren zur Freisichtprüfung einer Kamera im automobilen Umfeld, auf ein entsprechendes Steuergerät sowie auf ein entsprechendes Computerprogrammprodukt.

Die US-7423752 B2 befasst sich mit Nebelerkennungsalgorithmen, die versuchen die Sichtweite einer Kamera bei Nebel zu bestimmen. Dabei wird bei einer Objekterkennung auf eine Erkennung von Kanten aufgebaut.

Die EP-1548685 B1 beschreibt ein Verfahren, bei dem Informationen von 3D-Einheiten sowie eine Anzahl an vertikalen und horizontalen Kanten verwendet werden, um eine Blindheit der Kamera zu bestimmen.

Dokument EP-1548685 beschreibt ein Fahrunterstützungssystem für ein Fahrzeug, um einen Fahrer beim Fahren eines Fahrzeuges zu unterstützen, in dem geprüft wird, ob die Sicht des Fahrers durch Hindernisse eingeschränkt ist.

### Offenbarung der Erfindung

Vor diesem Hintergrund wird mit der vorliegenden Erfindung ein Verfahren zur Freisichtprüfung einer Kamera im automobilen Umfeld, weiterhin eine Vorrichtung, die dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Der erfindungsgemäße Ansatz ermöglicht eine Freisichtprüfung für Kameras, insbesondere im automobilen Umfeld. Erfindungsgemäß wird dazu eine Unterteilung eines Kamerabildes vorgenommen und es fließen Ergebnisse von anderen Messalgorithmen in die Bewertung mit ein. Vorteilhafterweise können spezielle Blindheitssignale für unterschiedliche Funktionen, zum Beispiel für einen Betrieb einer Windschutzscheibenheizung bei Kondensationsbildung, generiert werden.

Gemäß einer Ausführungsform kann zusätzlich eine Blindheitswahrscheinlichkeit für verschiedene Bereiche in einem Bild berechnet werden. Die Blindheitswahrscheinlichkeit kann mit einer Freisichtwahrscheinlichkeit verrechnet werden. Daraus können Blindheitssignale für verschiedene Algorithmen generiert werden. Die Algorithmen können wiederum in einen sicheren Zustand gehen, wenn Blindheit erkannt wurde.

Freisichtinformationen können zur Stützung der Blindheitskennung verwendet werden. Zusätzlich kann eine Sensitivität der Blindheitserkennung beleuchtungsabhängig sein. Zum Beispiel besteht bei Nacht eine geringere Wahrscheinlichkeit, dass es sich um Blindheit handelt, wenn wenige Kanten im Kamerabild gefunden werden. Wird das Kamerabild in Blindheitsregionen unterteilt, so können aus diesen wiederum Blindheitssignale berechnet werden. Zum Beispiel sind die Regionen im oberen Bereich des Bildes für die Blindheitserkennung der Funktion Spurerkennung nicht interessant. Erfindungsgemäß kann eine Entprellung der Blindheitssignale abhängig von der Dauer sein, in der Blindheit erkannt wird.

Die vorliegende Erfindung schafft ein Verfahren zur Freisichtprüfung einer Kamera für ein automobiles Umfeld, das die folgenden Schritte umfasst: Empfangen eines Kamerabildes über eine Empfangsschnittstelle; Unterteilen des Kamerabildes in eine Mehrzahl von Teilbildern; Bestimmen eines Freisichtwertes für jedes der Teilbilder, basierend auf einer Anzahl von in dem jeweiligen Teilbild erkannten Objekten; und Bestimmen einer Freisichtwahrscheinlichkeit für jedes der Teilbilder basierend auf den Freisichtwerten der jeweiligen Teilbilder.

Bei der Kamera kann es sich um eine Bilderfassungseinrichtung handeln, die im oder an einem Fahrzeug angeordnet ist. Die Kamera kann ausgebildet sein, um fortlaufend Bildinformationen oder Bilder einer Fahrzeugumgebung zu erfassen und bereitzustellen. Die Bilder können von unterschiedlichen Funktionen oder Konsumenten im Fahrzeug, beispielsweise einer Scheibenheizung oder einem Fahrspurassistenten genutzt werden. Ist die Kamera blind, so enthalten die an diese Funktionen bereitgestellten Bilder keine verwendbare Bildinformation. Wird die Blindheit nicht erkannt, so kann dies zu einer Fehlfunktion der Funktionen führen. Die Blindheit kann zum Beispiel durch eine starke Verschmutzung der Kameraoptik oder durch einen Defekt der Kamera hervorgerufen werden. Die Blindheit kann den gesamten Bildbereich oder nur einen oder mehrere Bildbausschnitte des von der Kamera bereitgestellten Bildes betreffen. Erfindungsgemäß wird das Gesamtbild daher in Teilbilder aufgeteilt, wobei jedes Teilbild einen bestimmten Bereich des Gesamtbildes umfasst. Alle Teilbilder zusammen können das Gesamtbild ergeben. Für jedes Teilbild wird eine Freisichtwahrscheinlichkeit bestimmt. Die Freisichtwahrscheinlichkeit definiert, mit welcher Wahrscheinlichkeit eine Freisicht der Kamera in dem von dem jeweiligen Teilbild abgedeckten Bereich vorliegt. Basierend auf der Freisichtwahrscheinlichkeit kann somit bestimmt werden, ob eine das Teilbild betreffende Bildinformation aufgrund einer Kamerablindheit fehlerhaft ist und daher in den entsprechenden Funktionen nicht oder nur bedingt ausgewertet werden sollte. Bei den Objekten, die zum Bestimmen des Freisichtwertes berücksichtigt werden, kann es sich beispielsweise um erkannte Fahrspuren oder Fremdfahrzeuge handeln. Die Objekterkennung kann von separaten Objekterkennungseinrichtungen durchgeführt werden. Die Objekterkennung kann basierend auf dem aktuellen Bild der Kamera oder basierend auf zeitlich vorangegangenen Bildern erfolgen.

Gemäß einer Ausführungsform kann das erfindungsgemäße Verfahren einen Schritt des Bestimmens von Kantenverläufen des Bildes für jedes der Teilbilder, einen Schritt des Einstellens eines Blindheitsschwellwertes abhängig von einer Helligkeit des Bildes und einen Schritt des Bestimmens eines Blindheitswertes für jedes der Teilbilder basierend auf den Kantenverläufen der jeweiligen Teilbilder unter Einsatz des Blindheitsschwellwertes, und einen Schritt des Bestimmens einer Blindheitswahrscheinlichkeit für jedes der Teilbilder basierend auf den Blindheitswerten und der Freisichtwahrscheinlichkeit umfassen. Somit kann die vorliegende Erfindung ein Verfahren zur Blindheitserkennung und Freisichtprüfung der Kamera schaffen. Indem die Blindheitswahrscheinlichkeit sowohl auf der Blindheitserkennung als auch auf der Freisichtwahrscheinlichkeit basiert, kann die Genauigkeit des erfindungsgemäßen Verfahrens erhöht werden. Die Blindheitswahrscheinlichkeit definiert, mit welcher Wahrscheinlichkeit eine Blindheit oder eine fehlende Freisicht der Kamera in dem von dem jeweiligen Teilbild abgedeckten Bereich vorliegt. Basierend auf der Blindheitswahrscheinlichkeit kann somit bestimmt werden, ob eine das Teilbild betreffende Bildinformation aufgrund einer Kamerablindheit fehlerhaft ist und daher in den entsprechenden Funktionen nicht oder nur bedingt ausgewertet werden sollte. Ein Kantenverlauf kann entlang einer Helligkeitsgrenze oder Luminizenzgrenze innerhalb des Bildes verlaufen. Somit kann eine Kante einen Helligkeitsunterschied oder einen Luminizenzunterschied definieren. Charakteristika der Kantenverläufe, wie beispielsweise deren Richtungen oder Längen können ausgewertet werden, um die Blindheitswerte zu bestimmen. Die Blindheitswerte können angeben, ob bezüglich des Unterbilds Blindheit vorliegt oder nicht vorliegt. Zum Bestimmen eines Blindheitswertes kann ein spezielles Charakteristika, beispielsweise eine Kantensteigung, mit einem Schwellwert verglichen werden. Der Schwellwert kann abhängig davon, welche Helligkeit das Bild aufweist, erhöht oder erniedrigt werden. Somit kann die Helligkeit einen direkten Einfluss auf eine Feststellung der Blindheit für die jeweiligen Teilbilder nehmen.

Gemäß einer Ausführungsform kann das Kamerabild im Schritt des Unterteilens in mehrere Reihen und mehrere Spalten aufgeteilt werden. Beispielsweise ist es für die Spurerkennung ausreichend, lediglich die untere Reihe oder die unteren Reihen von Teilbildern auf Blindheit zu überprüfen. Liegt beispielsweise in einer oberen Reihe Blindheit vor, so betrifft dies nur die Funktionen, die auch die obere Reihe von Teilbildern auswerten. Für diese Funktionen kann eine entsprechend hohe Blindheitswahrscheinlichkeit angegeben werden. Für die übrigen Funktionen kann dagegen eine geringe Blindheitswahrscheinlichkeit angegeben werden.

Der Blindheitsschwellwert kann basierend auf einer Helligkeitskennlinie eingestellt werden. Die Helligkeitskennlinie kann für unterschiedliche Helligkeitsstufen des Bildes unterschiedliche Blindheitsschwellwerte aufweisen. Auf diese Weise kann die Sensitivität der Blindheitserkennung beispielsweise bei einem dunkleren Bild reduziert und bei einem hellen Bild erhöht werden.

Das erfindungsgemäße Verfahren kann einen Schritt des Empfangens einer Objektinformation von einer Objekterkennungseinrichtung und einen Schritt des Ermittelns der Anzahl von in dem jeweiligen Teilbild erkannten Objekten, basierend auf der bereitgestellten Objektinformation, umfassen. Die Objektinformation kann von einer oder mehreren Objekterkennungseinrichtungen bereitgestellt werden, die mittels der Kamera eine Objekterkennung durchführen. Ein Objekt, das sich über mehrere Teilbilder erstreckt, kann für jedes der Teilbilder gezählt werden.

Werden in einem Teilbild viele Objekte gezählt, so deutet dies darauf hin, dass die Kamera zumindest bezüglich dieses Teilbilds nicht blind ist. Werden dagegen keine Objekte gezählt, so kann dies ein Hinweis auf eine Blindheit der Kamera sein.

Im Schritt des Bestimmens des Freisichtwertes kann ein Freisichtwert eines Teilbildes auf einen vorbestimmten Wert gesetzt werden, wenn die Anzahl der in dem jeweiligen Teilbild erkannten Objekte eine vorbestimmte Objektanzahl überschreitet. Werden mehr als die vorbestimmte Anzahl von Objekten erkannt, so kann mit hoher Wahrscheinlichkeit davon ausgegangen werden, dass keine Blindheit vorliegt. Der vorbestimmte Wert kann somit dafür stehen, das keine Blindheit oder anders ausgedrückt, freie Sicht, angenommen wird.

Im Schritt des Bestimmens des Freisichtwertes kann ein Freisichtwert eines Teilbildes um einen Differenzwert reduziert werden, wenn innerhalb eines vorbestimmten Zeitintervalls in dem jeweiligen Teilbild kein Objekt erkannt wird. Der reduzierte Freisichtwert steht dafür, dass eine erhöhte Wahrscheinlichkeit für das Vorliegen einer Blindheit bzw. eine geringere Freisichtwahrscheinlichkeit angenommen wird.

Gemäß einer Ausführungsform kann im Schritt des Bestimmens der Blindheitswahrscheinlichkeit für jedes der Teilbilder ein Blindheitswert und ein Freisichtwert der jeweiligen Teilbilder subtrahiert werden. Eine solche Verknüpfung ist aussagekräftig und kann einfach realisiert werden.

Ferner kann das erfindungsgemäß Verfahren einen Schritt des Bestimmens eines Blindheitssignals, basierend auf Blindheitswahrscheinlichkeiten einer Auswahl der Teilbilder, umfassen. Das Blindheitssignal kann eine Blindheitswahrscheinlichkeit der Kamera, in einem die Auswahl der Teilbilder umfassenden Bereich, definieren. Das Blindheitssignal kann an eine Funktion zur Auswertung oder Weiterverarbeitung derjenigen Teilbilder des Bildes oder weiterer Bilder der Kamera bereitgestellt werden, die von der Auswahl umfasst sind.

Die vorliegende Erfindung schafft ferner eine Vorrichtung zur Blindheitserkennung und Freisichtprüfung einer Kamera im automobilen Umfeld, die ausgebildet ist, um die Schritte des erfindungsgemäßen Verfahrens durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einer der vorstehend beschriebenen Ausführungsformen verwendet wird, wenn das Programm auf einer Vorrichtung ausgeführt wird.

Die Erfindung wird nachstehend anhand der beigefügten Zeichnungen beispielhaft näher erläutert. Es zeigen:
- Fig. 1: ein Ablaufdiagramm eines Ausführungsbeispiels der vorliegenden Erfindung;
- Fig. 2: ein Ablaufdiagramm eines weiteren Ausführungsbeispiels der vorliegenden Erfindung;
- Fig. 3: ein Ablaufdiagramm eines Teilabschnitts eines erfindungsgemäßen Verfahrens, gemäß einem Ausführungsbeispiel der vorliegenden Erfindung;
- Fig. 4: ein Ablaufdiagramm eines weiteren Teilabschnitts eines erfindungsgemäßen Verfahrens, gemäß einem Ausführungsbeispiel der vorliegenden Erfindung;
- Fig. 5: eine Darstellung eines Kamerabildes, gemäß einem Ausführungsbeispiel der vorliegenden Erfindung; und
- Fig. 6: eine Helligkeitskennlinie, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

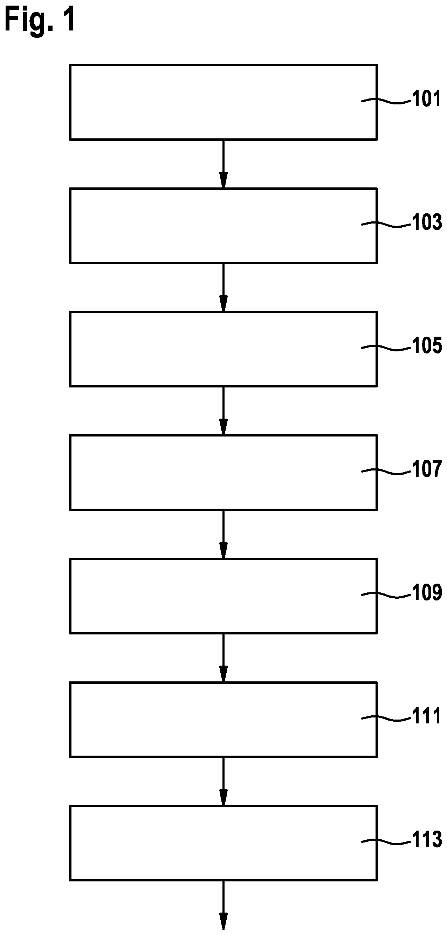

Fig. 1 zeigt ein Ablaufdiagramm eines Verfahrens zur Blindheitserkennung und Freisichtprüfung einer Kamera im automobilen Umfeld, gemäß einem Ausführungsbeispiel der vorliegenden Erfindung. In einem Schritt 101 wird ein Kamerabild empfangen. Das Kamerabild kann als Rohbild direkt von der Kamera empfangen werden oder als vorverarbeitetes Bild von einer Vorverarbeitungseinrichtung. In einem Schritt 103 wird das Kamerabild in eine Mehrzahl von Teilbildern unterteilt. Beispielsweise können drei Reihen und drei Spalten gebildet werden, so dass das Kamerabild in neun Teilbilder unterteilt wird. Alternativ kann das Kamerabild auf eine andere Weise unterteilt werden und es können mehr oder weniger als neun Teilbilder gebildet werden. Die Teilbilder können jeweils unterschiedliche Bildbereiche abdecken. Alternativ kann eine teilweise Überlappung der Teilbilder bestehen.

In einem Schritt 105 wird für jedes der Teilbilder ein eigener Freisichtwert bestimmt. Eine Größe des Freisichtswerts hängt jeweils davon ab, ob in dem zugeordneten Teilbild Objekte erkannt werden und sofern Objekte erkannt werden, wie viele Objekte erkannt werden. Die Erkennung der Objekte kann Teil des erfindungsgemäßen Verfahrens sein oder getrennt davon durchgeführt werden. Findet die Objekterkennung separat statt, so kann dem erfindungsgemäßen Verfahren eine entsprechende Objektinformation bereitgestellt werden, aus der die Anzahl der Objekte pro Teilbild ermittelt werden kann.

In einem Schritt 107 werden pro Teilbild Kantenverläufe bestimmt. Dies kann basierend auf bekannten Verfahren zur Bestimmung von Kanten in einem Bild erfolgen. In einem Schritt 109 wird ein Blindheitsschwellwert bestimmt und eingestellt. Der Blindheitsschwellwert wird abhängig von einer Helligkeit des Bildes eingestellt. Dazu kann zunächst die Helligkeit des Bildes bestimmt werden und anschließend kann ein der Helligkeit entsprechender Blindheitsschwellwert ausgewählt werden. In einem Schritt 111 wird für jedes Teilbild ein eigener Blindheitswert bestimmt. Der Blindheitswert wird bestimmt, in dem für jedes Teilbild ein auf den Kantenverläufen des jeweiligen Teilbilds basierender Wert gebildet und mit dem Blindheitsschwellwert verglichen wird. Abhängig von einem Vergleichsergebnis kann der Blindheitswert gesetzt werden. Beispielsweise kann der Blindheitswert einen ersten Wert aufweisen, wenn der Blindheitsschwellwert überschritten wird und einen zweiten Wert aufweisen, wenn der Blindheitsschwellwert unterschritten wird. Der erste Wert kann einen Hinweis auf eine für das entsprechende Teilbild bestehende Blindheit geben und der zweite Wert kann einen Hinweis auf eine für das entsprechende Teilbild bestehende Nicht-Blindheit geben, oder umgekehrt. In einem Schritt 113 wird eine Blindheitswahrscheinlichkeit für jedes der Teilbilder bestimmt. Die Blindheitswahrscheinlichkeit für ein Teilbild wird basierend auf dem Blindheitswert und dem Freisichtwert des jeweiligen Teilbilds bestimmt.

Somit werden für jedes der Teilbilder ein zugeordneter Freisichtwert, ein zugeordneter Blindheitswert und basierend darauf eine zugeordnete Blindheitswahrscheinlichkeit bestimmt. Die Blindheitswahrscheinlichkeit eines Teilbildes gibt an, mit welcher Wahrscheinlichkeit die Kamera in einem von dem Teilbild abgedeckten Bereich blind ist.

Die Blindheitswerte und die Freisichtwerte können parallel bestimmt werden. Die Blindheitswerte und die Freisichtwerte und somit die Blindheitswahrscheinlichkeiten können jeweils für alle Teilbilder oder nur für bestimmte Teilbilder bestimmt werden. Das erfindungsgemäße Verfahren kann fortlaufend wiederholt oder ansprechend auf eine Anfrage ausgeführt werden.

Gemäß einem Ausführungsbeispiel kann eine Freisichtwahrscheinlichkeit für jedes der Teilbilder basierend auf den Freisichtwerten der jeweiligen Teilbilder bestimmt werden. In diesem Fall können die Schritte 107, 109, 111 ausgelassen werden. Anstelle des Schritts 113 kann das Bestimmen der Freisichtwahrscheinlichkeit erfolgen.

Blindheitswahrscheinlichkeiten oder Freisichtwahrscheinlichkeiten einer Menge von Teilbildern können miteinander verknüpft werden, um eine Gesamtblindheitswahrscheinlichkeit oder Gesamtfreisichtwahrscheinlichkeit für eine Menge von Teilbildern zu bestimmen. Die Gesamtblindheitswahrscheinlichkeit, Gesamtfreisichtwahrscheinlichkeit oder ein darauf basierendes Signal kann an eine Funktion bereitgestellt werden, die einen Bereich des Kamerabildes auswertet oder weiterverarbeitet, der von der Menge von Teilbildern abgedeckt wird. Beispielsweise kann das auf der Gesamtblindheitswahrscheinlichkeit oder der Gesamtfreisichtwahrscheinlichkeit basierende Signal eine Warnung vor einer erkannten Blindheit oder nichtvorhandenen Freisicht umfassen, wenn eine durchschnittliche Blindheitswahrscheinlichkeit oder Freisichtwahrscheinlichkeit, die aus den Blindheitswahrscheinlichkeiten oder Freisichtwahrscheinlichkeit der Menge von Teilbildern gebildet wird, einen Grenzwert überschreitet oder unterschreitet. Alternativ kann das auf der Gesamtblindheitswahrscheinlichkeit oder Gesamtfreisichtwahrscheinlichkeit basierende Signal eine Warnung vor der erkannten Blindheit umfassen, wenn die Blindheitswahrscheinlichkeit eines oder mehrere Teilbilder einen Grenzwert unterschreiten oder überschreiten.

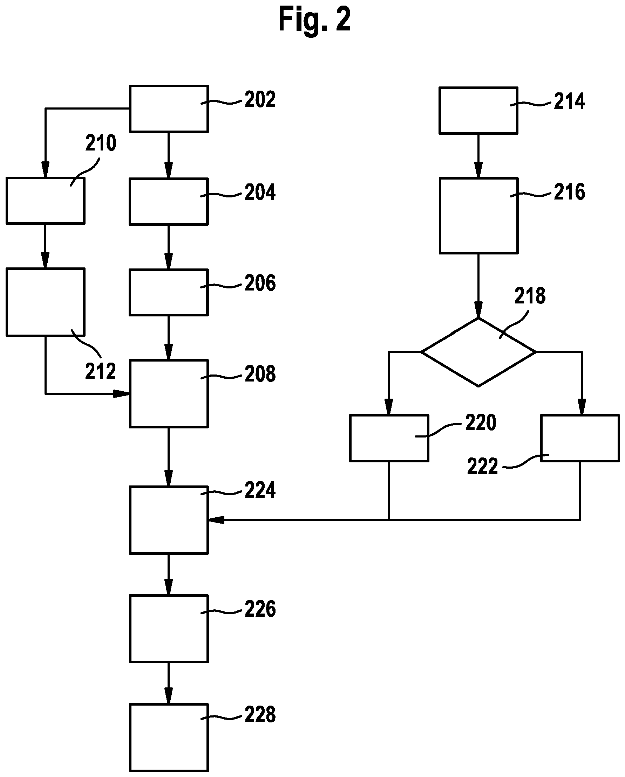

Fig. 2 zeigt ein Ablaufdiagramm eines Verfahrens zur Blindheitserkennung und Freisichtprüfung einer Kamera im automobilen Umfeld, gemäß einem weiteren Ausführungsbeispiel der vorliegenden Erfindung.

Gezeigt ist ein Sensorbild 202, das einem Kamerabild entsprechen kann. In einem Schritt 204 wird eine Aufteilung des Bildes 202 in neun Regionen durchgeführt. Die neun Regionen bilden eine 3x3 Matrix. Es folgt eine Bestimmung 206 der mittleren Kantensteigung pro Region. In einem Schritt 208 wird abhängig von einem Schwellwert die Blindheit pro Region bestimmt.

Parallel zu den Schritten 202, 204 kann in einem Schritt 210 die Helligkeit in dem Bild 202 oder in einer Region bestimmt werden. In einem Schritt 210 kann ein Schwellwert bestimmt werden. Dazu kann eine Kennlinie die Abhängigkeit zwisehen dem Schwellwert und der Helligkeit darstellen. Der Schwellwert kann zum Bestimmen der Blindheit im Schritt 208 eingesetzt werden.

Wiederum parallel zu den Schritten 202, 204, 208 können in einem Schritt 214 Ergebnisse von Messalgorithmen empfangen werden. Die Messalgorithmen können ausgebildet sein, um basierend auf dem Sensorbild 202 oder auf dem Sensorbild 202 zeitlich vorangegangenen Bildern beispielsweise Spuren, Objekte oder Verkehrszeichen, zusammenfassend als Objekte bezeichnet, zu erkennen. In einem Schritt 216 kann ein Zählen der Anzahl der Objekte durchgeführt werden, die in einem Zeitintervall in einer der neun Regionen detektiert werden. Anschließend kann ein Schwellwertvergleich 218 durchgeführt werden. Sind mehr erkannte Objekte in der Region, als ein Schwellwert vorgibt, so kann in einem Schritt 220 eine Freisichtwahrscheinlichkeit für diese Region auf 100% gesetzt werden. Sind dagegen nicht mehr erkannte Objekte in der Region, als der Schwellwert vorgibt, so kann in einem Schritt 222 die Freisichtwahrscheinlichkeit für diese Region verringert werden. Beispielsweise kann eine aktuelle Freisichtwahrscheinlichkeit für diese Region aus einer bestehenden Freisichtwahrscheinlichkeit für diese Region gebildet werden, indem von der bestehenden Freisichtwahrscheinlichkeit der Wert 1 abgezogen wird. In diesem Fall gilt: Freisichtwahrscheinlichkeit = Freisichtwahrscheinlichkeit -1.

Die Schritte 202, 204, 206, 208, 210, 212 dienen der Blindheitserkennung. Die Schritte 214, 216, 218, 220, 222 dienen der Freisichterkennung.

In einem Schritt 224 werden die im Schritt 208 bestimmte Blindheiten und die aus in den Schritten 220, 222 bestimmten Freisichtwahrscheinlichkeiten zusammengeführt und es wird eine Blindheitswahrscheinlichkeit bestimmt. Dabei kann für jede Region eine eigene Blindheitswahrscheinlichkeit bestimmt werden. Gemäß diesem Ausführungsbeispiel gilt: Blindheitswahrscheinlichkeit = Blindheit - Freisicht. Ein Wert der Freisicht kann der Freisichtwahrscheinlichkeit entsprechen. In einem Schritt 226 wird ein Blindheitssignal für jede Funktion bestimmt, die von dem erfindungsgemäßen Verfahren mit Blindheitsinformationen versorgt wird. Ein Blindheitssignal, das für eine bestimmte Funktion bestimmt wird, kann aus Blindheitswahrscheinlichkeiten unterschiedlicher Regionen bestimmt werden. Ein Senden des oder der Blindheitssignale wird in einem Schritt 228 durchgeführt.

Im Folgenden werden einzelne Verfahrensschritte der erfindungsgemäßen Blindheitserkennung und Freisichtprüfung, gemäß weiteren Ausführungsbeispielen näher beschrieben.

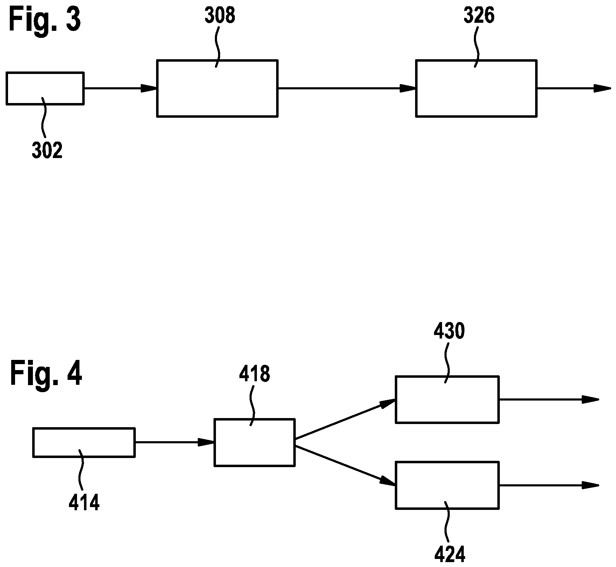

Fig. 3 zeigt ein Blockschaltbild einer Blindheitserkennung gemäß einem Ausführungsbeispiel der vorliegenden Erfindung. Gezeigt ist ein Imager oder Bildwandler 302, der ausgebildet ist, um ein Rohbild an eine Einrichtung 308 zur Blindheitserkennung bereitzustellen. Die Einrichtung 308 zur Blindheitserkennung ist ausgebildet, um basierend auf dem Rohbild eine Blindheitsmatrix zu bestimmen und an eine Einrichtung 326 zur Signalaufbereitung bereitzustellen. Die Einrichtung 326 zur Signalaufbereitung ist ausgebildet, um basierend auf der Blindheitsmatrix Signale an die Konsumenten der Blindheitserkennung bereitzustellen.

Bezogen auf das in Fig. 2 gezeigte Ausführungsbeispiel kann der Imager 302 ausgebildet sein, um das Sensorbild 202 bereitzustellen. In der Einrichtung 308 können beispielsweise die Verfahrensschritte 204, 206, 208, 210, 212, 224 und in der Einrichtung 326 die Verfahrensschritte 226, 228 umgesetzt werden.

Zur Blindheitserkennung kann jedes Bild, beispielsweise das von dem Imager 302 bereitgestellte Bild, in neun gleich große Regionen aufgeteilt werden. Das Bild kann alternativ in mehr oder weniger als neun Regionen aufgeteilt werden. Für jede Regionen kann beispielsweise in der Einrichtung 308 eine Blindheitswahrscheinlichkeit berechnet werden. Die Blindheitswahrscheinlichkeit kann auf den Strukturen basieren, die im Bild gefunden werden. Bei den Strukturen kann es sich um Kanten handeln. In einer weiteren Komponente, die der Einrichtung 326 entsprechen kann, können die Signale für die einzelnen Blindheitskonsumenten bestimmt werden. Blindheitskonsumenten können beispielsweise FDD, ACC, SHE oder RSR umfassen. FDD betrifft eine Fahrzeugdetektion bei Dunkelheit. Es wird für die Ansteuerung der Scheinwerfer benötigt. Wenn Blindheit vorliegt, dann werden keine Fahrzeuge entdeckt und es wird mit Dauerfernlicht gefahren, was zu Blendungen führt. ACC betrifft ein Adaptive Cruise Control. Das Fahrzeug fährt damit automatisch an und muss dazu den Raum von dem Fahrzeug überwachen, falls Blindheit vorliegt, dann wird beispielsweise ein Fußgänger nicht erkannt. SHE betrifft die Scheibenheizung. Falls Blindheit entdeckt wurde, dann wird erst einmal geheizt, um die Blindheit ggf. wegzubekommen. RSR betrifft eine Road Sign Recognition oder Straßenschildererkennung.

Fig. 4 zeigt ein Blockschaltbild einer Freisichtprüfung und Blindheitserkennung gemäß einem Ausführungsbeispiel der vorliegenden Erfindung. Gezeigt sind Algorithmen 414, die ausgebildet sind, um Ergebnisse an eine Einrichtung 418 zur Freisichtprüfung bereitzustellen. Die Einrichtung 418 zur Freisichtprüfung ist ausgebildet, um basierend auf den Ergebnissen eine Freisichtmatrix zu bestimmen und an eine Einrichtung 424 zur Blindheitserkennung und an eine Einrichtung 430 zur Signalaufbereitung bereitzustellen. Die Einrichtung 430 zur Signalaufbereitung ist ausgebildet, um basierend auf der Freisichtmatrix ein Signal "Freisicht_nio" bereitzustellen. Die Einrichtung 424 zur Blindheitserkennung ist ausgebildet, um basierend auf der Freisichtmatrix Blindheitssignale bereitzustellen. Die Freisichtmatrix kann für jede Region einen Freisichtwahrscheinlichkeitswert aufweisen.

Bezogen auf das in Fig. 2 gezeigte Ausführungsbeispiel, können die Algorithmen 414 ausgebildet sein, um die Ergebnisse 214 bereitzustellen. Die Einrichtung 418 kann ausgebildet sein, um die Verfahrensschritte 216, 218, 220, 222 umzusetzen. Die Einrichtung 424 kann ausgebildet sein, um den Verfahrensschritt 224 umzusetzen.

Zur Freisichtprüfung kann das Bild, wie bei der Blindheitserkennung in neun gleich große Regionen aufgeteilt werden. Wenn innerhalb eines Zeitintervalls, beispielsweise von einer Sekunde, mehr als eine bestimmte Anzahl an Objekte, beispielsweise Spuren, FDD- oder MOV-Objekte detektiert werden, dann wird das entsprechende Matrixelement auf 100% gesetzt Wenn in den weiteren Zeitintervallen keine Objekte mehr detektiert werden, dann degradiert der Freisichtwert jeweils um 1% pro Zeitintervall. MOV bedeutet MonoocularObjectVerfiaktion und müsste eigentlich MOD (ObjectDetection) heißen, da mit Hilfe der Kamera tagsüber Objekte, wie Autos oder Motorräder detektiert werden.

Basierend auf der Freisichtprüfung kann das Signal freisicht_nio bestimmt werden. Insbesondere kann das Signal freisicht_nio basierend auf der Freisichtmatrix bestimmt werden. Falls genügend Objekte, beispielsweise LDA-, FDD- und MOV-Objekte, im Bild erkannt wurden, wird das Signal freisicht_nio gemäß diesem Ausführungsbeispiel von 1 auf 0 gesetzt. Das Signal ist zu Beginn eines Klemme 15 Zyklus gesetzt. Sobald freie Sicht erkannt wurde, wird Signal freisicht_nio gesendet und nicht wieder neu berechnet.

Somit kann basierend auf den von den Algorithmen 414 bereitgestellten Ergebnissen sowohl eine Freisichtprüfung als auch eine Blindheitserkennung durchgeführt werden. Eine erkannte Freisicht führt zur Heilung der Blindheit. Dies gilt gemäß diesem Ausführungsbeispiel allerdings nur für die Freisichtprüfung auf der DPC, d.h. die Ergebnisse von LDA und FDD werden verwendet. Dabei wird von der Blindheitswahrscheinlichkeit der Freisichtprozentwert abgezogen. Basierend auf dieser neuen Blindheitsmatrix, der so genannten geheilten Blindheitsmatrix können die einzelnen Signale der Blindheitserkennung berechnet. DPC bedeutet Dual Purpose Camera. Es gibt auf der Kameras nur zwei Hauptfunktionen und zwar die Spur- und Fahrzeugerkennung bei Dunkelheit.

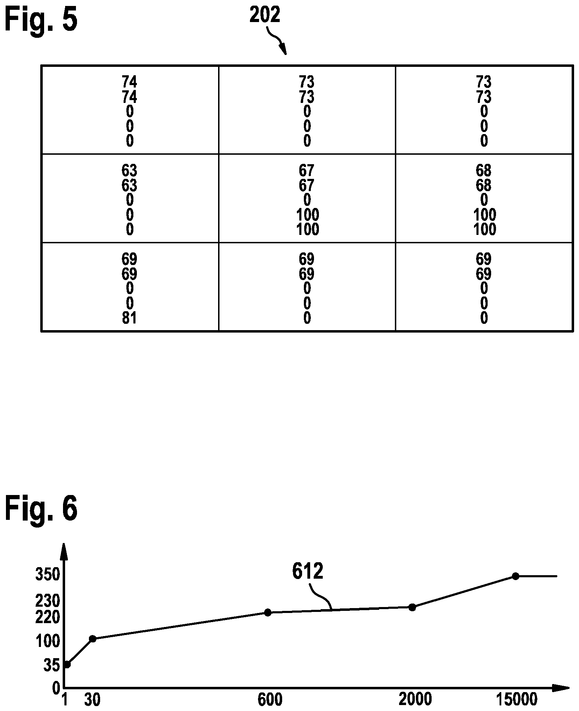

Fig. 5 zeigt ein Sensorbild 202, gemäß einem Ausführungsbeispiel der vorliegenden Erfindung. Das Bild ist in drei Spalten und drei Reihen unterteilt, so dass sich neun Teilbilder ergeben. Für jedes Teilbild sind die Blindheit und die Freisicht betreffende Werte angegeben, die gemäß dem erfindungsgemäßen Verfahren, für das gezeigte Bild 202 bestimmt werden können.

Für die Teilbilder der oberen Reihe sind, von links nach rechts die folgenden Werte bestimmt worden:

| | | | |
|---|---|---|---|
| Blindheitsindikator: | 74, | 73, | 73 |
| geheilte Blindheit: | 74, | 73, | 73 |
| Freisicht DCP: | 0, | 0, | 0 |
| Freisicht BVS: | 0, | 0, | 0 |
| kombinierte Freisicht: | 0, | 0, | 0 |

Für die Teilbilder der mittleren Reihe sind, von links nach rechts die folgenden Werte bestimmt worden:

| | | | |
|---|---|---|---|
| Blindheitsindikator: | 63, | 67, | 68 |
| geheilte Blindheit: | 63, | 67, | 68 |
| Freisicht DCP: | 0, | 0, | 0 |
| Freisicht BVS: | 0, | 100, | 100 |
| kombinierte Freisicht: | 0, | 100, | 100 |

Für die Teilbilder der unteren Reihe sind, von links nach rechts die folgenden Werte bestimmt worden:

| | | | |
|---|---|---|---|
| Blindheitsindikator: | 69, | 69, | 69 |
| geheilte Blindheit: | 69, | 69, | 69 |
| Freisicht DCP: | 0, | 0, | 0 |
| Freisicht BVS: | 0, | 0, | 0 |
| kombinierte Freisicht: | 81, | 0, | 0 |

Wenn das Signal Freisicht_nio = 0 einmal gesetzt wurde, dann wird die Freisichterkennung auf dem BVS nicht mehr durchgeführt. BVS bedeutet BildVerarbeitungsSteuergerät. Da die Kamera nur zwei Funktionen darstellen kann, werden die anderen Funktionen auf dem BVS berechnet.

Das Bild 202 zeigt eine verschneite Windschutzscheibe eines Fahrzeugs. Das Bild 202 weist in den Teilbildern der oberen Reihe eine höhere Helligkeit als in den Teilbildern der unteren Reihe auf. In dem Bild 202 sind keine klaren Strukturen und keine Objekte zu erkennen.

Mittels des erfindungsgemäßen Verfahren können Blindheitssignale bestimmt und bereitgestellt werden. Bezogen auf Fig. 2 können die Blindheitssignale im Verfahrensschritt 226 bestimmt werden.

Gemäß diesem Ausführungsbeispiel werden für jeden Konsumenten der Blindheitserkennung die Bereiche im Bild gewählt, in denen Blindheit erkannt werden soll. Wenn die mittlere Blindheitswahrscheinlichtkeit in diesen Regionen für eine vorbestimmte Zeitdauer, beispielsweise von 45 Sekunden, höher ist, als ein Schwellwert, so wird das entsprechende Blindheitssignal gesendet.

Für den Konsumenten Scheibenheizung wird das ganze Bild wird zur Erkennung verwendet. Es werden somit alle Teilbilder gewählt. In Bezug auf die Blindheit ACC wird der mittlere und untere Teil des Bildes, also beispielsweise die in Fig. 5 gezeigten Teilbilder der mittleren und unteren Reihe, genutzt. In Bezug auf die Blindheit FDD wird der mittlere Bereich des Bildes genutzt. In Bezug auf die Blindheit RSR wird der mittlere und obere Bereich verwendet. In Bezug auf die Blindheit Fehlerspeichereintrag gilt eine Entprellzeit von 30min und das ganze Bild wird verwendet.

Fig. 6 zeigt eine Helligkeitskennlinie 612, gemäß einem Ausführungsbeispiel der vorliegenden Erfindung. Die Helligkeitskennlinie 612 ist in einem Diagramm aufgetragen, wobei auf der Abszisse eine Lichtintensität cbl (Camera Based Lightsensor) und auf der Ordinate ein Mittelwert eines Schwellwertes aufgetragen, der eine Sensitivität der Blindheitserkennung darstellt. Bezogen auf Fig. 2 kann die Helligkeitskennlinie 612 im Verfahrensschritt 212 eingesetzt werden. Abhängig von der Helligkeit des Bildes kann aus der Helligkeitskennlinie 612 ein Schwellwert abgelesen werden, der im Verfahrensschritt 208 eingesetzt werden kann.

Der Schwellwert weist für eine Lichtintensität von 1 cbl einen Wert von 35, für eine Lichtintensität von 30cbl einen Wert von 100, für eine Lichtintensität von 600cbl einen Wert von 220, für eine Lichtintensität von 2000cbl einen Wert von 230 und für eine Lichtintensität von 15000cbl einen Wert von 350 auf. Somit kann bei einem dunklen Bild ein kleinerer Schwellwert und bei einem hellen Bild ein größerer Schwellwert gewählt werden. Entsprechend dazu besteht bei einem dunklen Bild eine geringe Sensitivität in Bezug auf die Feststellung der Blindheit als bei einem extrem hellen Bild. Dazwischen weist die Sensitivität lediglich einen geringen Anstieg mit zunehmender Helligkeit auf.

Die Helligkeitskennlinie 612 definiert eine Sensitivität der Blindheitserkennung. Besonders bei Nacht können sehr strukturarme Szenen auftreten, die ähnlich zu Blindheitsszenen sind. Daher gibt es eine helligkeitsabhängige Sensitivität der Blindheitserkennung, wie sie durch die Kennlinie 612 gezeigt ist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Verfahren zur Freisichtprüfung einer Kamera für ein automobiles Umfeld, das die folgenden Schritte umfasst:
Empfangen (101) eines Kamerabildes (202) über eine Empfangsschnittstelle;
Unterteilen (103) des Kamerabildes in eine Mehrzahl von Teilbildern;
Bestimmen (105) eines Freisichtwertes für jedes der Teilbilder, basierend auf einer Anzahl von in dem jeweiligen Teilbild erkannten Objekten, wobei ein Freisichtwert eines Teilbildes auf einen vorbestimmten Wert, der dafür steht, dass freie Sicht angenommen wird, gesetzt wird (220), wenn die Anzahl der in dem jeweiligen Teilbild erkannten Objekte eine vorbestimmte Objektanzahl überschreitet und bei dem ein Freisichtwert eines Teilbildes um einen Differenzwert reduziert wird (222), wenn innerhalb eines vorbestimmten Zeitintervalls in dem jeweiligen Teilbild kein Objekt erkannt wird; und
Bestimmen einer Freisichtwahrscheinlichkeit für jedes der Teilbilder basierend auf den Freisichtwerten der jeweiligen Teilbilder, wobei die Freisichtwahrscheinlichkeit definiert, mit welcher Wahrscheinlichkeit eine Freisicht der Kamera in dem von dem jeweiligen Teilbild abgedeckten Bereich des Kamerabildes vorliegt.

2. Verfahren gemäß Anspruch 1, mit einem Schritt des Bestimmens (107) von Kantenverläufen des Bildes für jedes der Teilbilder, einem Schritt des Einstellens (109) eines Blindheitsschwellwertes abhängig von einer Helligkeit des Bildes und einem Schritt des Bestimmens (111) eines Blindheitswertes für jedes der Teilbilder basierend auf den Kantenverläufen der jeweiligen Teilbilder unter Einsatz des Blindheitsschwellwertes, wobei ein Charakteristika der Kantenverläufe mit dem Blindheitsschwellwert verglichen wird, und mit einem Schritt des Bestimmens (113) einer Blindheitswahrscheinlichkeit für jedes der Teilbilder basierend auf den Blindheitswerten und der Freisichtwahrscheinlichkeit.

3. Verfahren gemäß Anspruch 2, bei der der Blindheitsschwellwert basierend auf einer Helligkeitskennlinie (612) eingestellt wird.

4. Verfahren gemäß einem der vorangegangenen Ansprüche, mit einem Schritt des Empfangens einer Objektinformation von einer Objekterkennungseinrichtung und einem Schritt des Ermittelns (216) der Anzahl von in dem jeweiligen Teilbild erkannten Objekten basierend auf der bereitgestellten Objektinformation.

5. Verfahren gemäß einem der Ansprüche 2 bis 4, bei dem im Schritt des Bestimmens (113) der Blindheitswahrscheinlichkeit für jedes der Teilbilder ein Blindheitswert und ein Freisichtwert der jeweiligen Teilbilder subtrahiert (228) werden.

6. Verfahren gemäß einem der Ansprüche 2 bis 5, mit einem Schritt des Bestimmens (226) eines Blindheitssignals basierend auf Blindheitswahrscheinlichkeiten einer Auswahl der Teilbilder, wobei das Blindheitssignal eine Blindheitswahrscheinlichkeit der Kamera in einem die Auswahl der Teilbilder umfassenden Bereich definiert.

7. Vorrichtung, die ausgebildet ist, um die Schritte eines Verfahrens gemäß einem der Ansprüche 1 bis 6 durchzuführen.

8. Computerprogrammprodukt mit Programmcode, der auf einem maschinenlesbaren Träger gespeichert ist, zur Durchführung des Verfahrens nach einem der Ansprüche 1 bis 6, wenn das Programm auf einem Steuergerät ausgeführt wird.

## Claims

1. Method for an unobstructed-view check of a camera for a motor-vehicle environment, comprising the following steps:
receiving (101) a camera image (202) via a receiving interface;
dividing (103) the camera image into a plurality of partial images;
determining (105) an unobstructed-view value for each of the partial images based on a number of objects detected in the respective partial image, wherein an unobstructed-view value of a partial image is set (220) to a predetermined value which indicates that unobstructed view is assumed if the number of the objects detected in the respective partial image exceeds a predetermined object number, and in which an unobstructed-view value of a partial image is reduced (222) by a difference value if no object is detected in the respective partial image within a predetermined time interval; and
determining an unobstructed-view probability for each of the partial images based on the unobstructed-view values of the respective partial images, wherein the unobstructed-view probability defines the probability with which an unobstructed view of the camera is present in the region of the camera image that is covered by the respective partial image.

2. Method according to Claim 1, comprising a step of determining (107) edge profiles of the image for each of the partial images, a step of setting (109) a blindness threshold value in dependence on a brightness of the image, and a step of determining (111) a blindness value for each of the partial images based on the edge profiles of the respective partial images using the blindness threshold value, wherein a characteristic of the edge profiles is compared to the blindness threshold value, and comprising a step of determining (113) a blindness probability for each of the partial images based on the blindness values and the unobstructed-view probability.

3. Method according to Claim 2, in which the blindness threshold value is set on the basis of a brightness characteristic curve (612).

4. Method according to one of the preceding claims, comprising a step of receiving object information from an object detection device and a step of ascertaining (216) the number of objects detected in the respective partial image on the basis of the provided object information.

5. Method according to one of Claims 2 to 4, in which, in the step of determining (113) the blindness probability for each of the partial images, a blindness value and an unobstructed-view value of the respective partial images are subtracted (228).

6. Method according to one of Claims 2 to 5, comprising a step of determining (226) a blindness signal on the basis of blindness probabilities of a selection of the partial images, wherein the blindness signal defines a blindness probability of the camera in a region comprising the selection of the partial images.

7. Apparatus which is configured to perform the steps of a method according to one of Claims 1 to 6.

8. Computer program product having program code stored on a machine-readable carrier, for performing the method according to one of Claims 1 to 6 if the program is executed on a control device.

## Revendications

1. Procédé pour vérifier la non-occultation visuelle d'une caméra destinée à l'environnement d'une automobile, comprenant les étapes consistant à :
recevoir (101) une image de caméra (202) par l'intermédiaire d'une interface de réception ;
subdiviser (103) l'image de caméra en une pluralité d'mages partielles ;
déterminer (105) une valeur de non-occultation visuelle pour chacune des images partielles sur la base d'un nombre d'objets reconnus dans l'image partielle respective, dans lequel une valeur de non-occultation d'une image partielle est fiée (200) à une valeur prédéterminée qui correspond au fait qu'une vue dégagée est obtenue, lorsque le nombre des objets reconnus dans l'image partielle respective dépasse un nombre prédéterminé d'objets et pour lequel une valeur de non-occultation d'une image partielle est réduite (222) d'une valeur de différence lorsqu'aucun objet n'est reconnu au cours d'un intervalle de temps prédéterminé dans l'image partielle respective ; et
déterminer une probabilité de non-occultation pour chacune des images partielles sur la base des valeurs de non-occultation des images partielles respectives, dans lequel la probabilité de non-occultation définit la probabilité avec laquelle une non-occultation de la caméra est présente dans la zone de l'image de caméra qui est couverte par l'image partielle respective.

2. Procédé selon la revendication 1, comportant une étape consistant à déterminer (107) des étendues de bords de l'image pour chacune des images partielles, une étape consistant à régler (109) une valeur de seuil d'occultation en fonction d'une luminosité de l'image et une étape consistant à déterminer (111) une valeur d'occultation pour chacune des images partielles sur la base des étendues de bords des images partielles respectives par utilisation de la valeur de seuil d'occultation, dans lequel une caractéristique des étendues de bords est comparée à la valeur de seuil d'occultation, et comportant une étape consistant à déterminer (113) une probabilité d'occultation pour chacune des images partielles sur la base des valeurs d'occultation et de la probabilité de non-occultation.

3. Procédé selon la revendication 2, dans lequel la valeur d'occultation est réglée sur la base d'une courbe caractéristique de luminosité (612).

4. Procédé selon l'une quelconque des revendications précédentes, comportant une étape consistant à recevoir une information d'objet en provenance d'un dispositif de reconnaissance d'objet et une étape consistant à déterminer (216) le nombre des objets reconnus dans l'image partielle respective sur la base de l'information d'objet fournie.

5. Procédé selon l'une quelconque des revendications 2 à 4, dans lequel une valeur d'occultation et une valeur de non-occultation sont soustraites (228) à l'image partielle respective lors de l'étape de détermination (113) de la probabilité d'occultation.

6. Procédé selon l'une quelconque des revendications 2 à 5, comportant une étape consistant à déterminer (226) un signal d'occultation sur la base de probabilités d'occultation d'une sélection des images partielles, dans lequel le signal d'occultation définit une probabilité d'occultation de la caméra dans une zone comprenant la sélection des images partielles.

7. Dispositif conçu pour mettre en oeuvre les étapes d'un procédé selon l'une quelconque des revendications 1 à 6.

8. Produit de programme d'ordinateur comportant un code de programme qui est stocké sur un support lisible par machine destiné à mettre en oeuvre le procédé selon l'une quelconque des revendications 1 à 6 lorsque le programme est exécuté sur un appareil de commande.
